# FASCICULE DE BREVET EUROPEEN

(11) **EP 2 147 726 B1**
(45) Date de publication et mention de la délivrance du brevet: **25.05.2011**
(21) Numéro de dépôt: 09166253.6
(22) Date de dépôt: 23.07.2009
(51) Int. Cl.: B08B 1/00, B29B 7/18

(54) **Installation et procédé de raclage d'une selle d'un mélangeur de gomme**
Abstreifeinrichtung und Abstreifverfahren für einen Gummimischer.
Device and process for scraping a rubber mixer

(30) Priorité: 24.07.2008 FR 0855073
(43) Date de publication de la demande: 27.01.2010
(73) Titulaire: Société de Technologie MICHELIN, 63000 Clermont-Ferrand (FR); MICHELIN Recherche et Technique S.A., 1763 Granges-Paccot (CH)
(72) Inventeur: Crosnier, Gérard, 63122 Ceyrat (FR); Letocart, Arnaud, 63460 Combronde (FR)
(74) Mandataire: Reynaud, Georges

(56) Documents cités:
- US-A- 3 468 518
- US-A- 4 234 259

## Description

La présente invention concerne une installation pour la fabrication d'une masse de gomme.

Cette masse de gomme est notamment destinée à être utilisée pour la fabrication de pneumatiques.

On connaît déjà dans l'état de la technique notamment de US-A 4234259 et US- 3468518 une installation de fabrication d'une masse de gomme comprenant une cuve de mélangeage de la masse de gomme selon le préambule de la revendication 1.

La cuve comprend une ouverture de chargement de la cuve, une ouverture de sortie de la masse de gomme et une porte d'obturation de l'ouverture de sortie. Cette porte est mobile en rotation autour d'un axe de la porte entre une position d'obturation de l'ouverture de sortie et une position de dégagement de cette ouverture.

La cuve comprend également deux rotors de mélangeage mobiles rotatifs autour d'axes sensiblement parallèles à l'axe de la porte.

La porte présente une surface, dite interne, générée par des génératrices sensiblement parallèles à l'axe des rotors. En règle générale, l'axe de la porte est également parallèle à l'axe des rotors. Lors du mélangeage, la gomme est homogénéisée notamment sous l'effet des contraintes exercées sur la gomme circulant entre les rotors et la surface interne de la porte.

Toutefois, dans le cas de certaines formulations de gomme, la gomme adhère à la surface interne de la porte de sorte que, lors de l'ouverture de la porte, un résidu de gomme adhère à la surface interne et que, lors de la fermeture de la porte, ce résidu de gomme retourne dans la cuve.

Or la formulation de la gomme ultérieurement mélangée dans la cuve pouvant être différente de celle précédemment mélangée dans la cuve, le retour dans la cuve d'un résidu de gomme peut modifier la formulation de la gomme destinée à être mélangée, ce que l'on souhaite éviter pour maîtriser la qualité de la formulation. En outre, le résidu peut également empêcher la fermeture correcte de la porte ce que l'on souhaite également éviter.

Il est donc généralement prévu lorsque la porte de la cuve est ouverte, qu'un opérateur procède à un nettoyage manuel de la surface interne de la porte à l'aide d'un racloir. Ce nettoyage manuel est fastidieux et nécessite d'immobiliser la porte en position ouverte pendant la durée du nettoyage ce qui perturbe les cadences de production de gomme. De plus, la présence de l'opérateur à proximité de la cuve implique des mesures de sécurité consistant à désactiver temporairement au moins une partie de l'installation ce qui perturbe davantage ces cadences de production.

L'invention a pour but de fournir une installation permettant d'éviter que le nettoyage de la surface interne de la porte ne perturbe les cadences de production de la gomme.

A cet effet, l'invention a pour objet une installation de fabrication d'une masse de gomme du type comprenant une cuve de mélangeage de la masse de gomme comprenant
- une ouverture de sortie de la masse de gomme ;
- une porte d'obturation de l'ouverture mobile entre :
   o une position d'obturation de l'ouverture, et
   o une position de dégagement de l'ouverture,
      caractérisée en ce qu'elle comprend, de plus :
- un dispositif de raclage de la gomme adhérant à une surface, dite interne, de la porte, ce dispositif comprenant un organe de raclage mobile comportant un bord destiné à racler la gomme adhérant à la surface interne, et
des moyens de synchronisation entre les déplacements de la porte et de l'organe de raglage selon la revendication 1.

L'installation selon l'invention permet de nettoyer la porte sans perturber le fonctionnement de l'installation. En effet, le déplacement de l'organe de raclage étant synchronisé avec celui de la porte, l'organe de raclage peut racler la gomme adhérant à la surface interne lors de l'ouverture de celle-ci sans qu'une intervention humaine ne soit nécessaire. En outre, le raclage de la surface interne est réalisé en temps masqué ce qui permet d'éviter d'immobiliser inutilement la porte en position ouverte.

Selon une caractéristique optionnelle de l'installation selon l'invention, la porte est mobile en rotation autour d'un axe de la porte et l'organe de raclage est articulé en rotation autour d'un axe du dispositif de raclage sensiblement parallèle à l'axe de la porte.

De préférence, la surface interne étant générée par des génératrices sensiblement parallèles aux axes, la trajectoire de la surface interne intersecte, dans un plan sensiblement perpendiculaire aux axes, la trajectoire du bord de raclage.

Ainsi, la totalité de la surface interne de la porte peut être raclée. En effet, le bord de l'organe de raclage racle la surface interne dont la trajectoire a intersecté celle de ce bord de raclage. Ainsi, quelle que soit la forme de la surface interne, si la trajectoire de toute la surface interne, entre ses positions d'obturation et de dégagement, intersecte la trajectoire du bord de raclage, toute la surface interne peut être raclée.

Selon d'autres caractéristiques optionnelles de l'installation :
- Le dispositif de raclage comprend des moyens de déplacement et de sollicitation de l'organe de raclage contre la gomme à racler, comprenant notamment un vérin.
- L'installation comprenant des moyens de déplacement de la porte, les moyens de synchronisation comprennent une unité de pilotage reliant les moyens de déplacement de l'organe de raclage et les moyens de déplacement de la porte. L'unité de pilotage permet de régler notamment la vitesse du déplacement de l'organe de raclage par rapport à la position de la porte et/ou la position de l'organe de raclage ou/et la trajectoire de la surface interne.

Optionnellement, le dispositif de raclage comprend une paire de bras de support de l'organe de raclage entre lesquels s'étend l'organe de raclage, les bras étant montés mobiles en rotation autour de l'axe du dispositif de raclage et délimitant un espace de dégagement dans lequel la porte est destinée à être déplacée au moins sur une partie de sa trajectoire entre ses positions d'obturation et de dégagement.

Selon un mode de réalisation de l'invention, l'organe de raclage comprend une lame destinée à venir au contact de la surface interne de la porte.

De préférence, la lame est montée articulée sur les bras autour d'un axe d'orientation de la lame par rapport à la surface interne, l'axe d'orientation étant sensiblement parallèle aux axes.

L'orientation de la lame par rapport à la surface interne peut ainsi être modifiée en fonction de la portion de la surface interne contre avec laquelle la lame est en contact. De préférence, la lame est orientable de sorte que la lame présente une incidence angulaire constante par rapport à la surface interne. L'incidence angulaire est définie par l'angle entre la lame et une normale à la surface interne au point de contact entre la lame et la surface.

De façon optionnelle, le dispositif de raclage comprend des moyens d'orientation angulaire automatiques de la lame autour de l'axe d'orientation, de préférence des moyens de déplacement de la lame autour de l'axe de rotation, tel qu'un palonnier ou encore par gravité, tels que des poids ou des balourds fixés à un axe, et assurant l'appui de la lame sur la surface interne de la porte.

Dans un autre exemple, les moyens d'orientation angulaire automatiques sont reliés aux moyens de synchronisation ce qui permet de régler l'orientation de la lame en fonction de la position de l'organe ou/et de la position de la porte et/ou de la trajectoire de la surface interne.

En variante, la lame est fixe par rapport aux bras.

Dans cette variante, l'incidence angulaire de la lame par rapport à la surface interne varie.

Selon un autre mode de réalisation de l'invention, l'organe de raclage comprend un fil de raclage destiné à venir au contact de la surface interne de la porte.

Un autre objet de l'invention est un procédé de fabrication d'une masse de gomme caractérisé en ce qu'on fabrique une masse de gomme dans une installation telle que définie ci-dessus et en ce qu'on synchronise entre eux les déplacements de l'organe de raclage et de la porte.

L'invention sera mieux comprise à la lecture de la description qui va suivre, donnée uniquement à titre d'exemple non limitatif et faite en se référant aux dessins dans lesquels :
- la figure 1 est une vue en perspective d'une installation selon un premier mode de réalisation de l'invention ;
- la figure 2 est une autre vue en perspective de l'installation de la figure 1 ;
- la figure 3 est une vue agrandie d'un dispositif de raclage de l'installation de la figure 1 ;
- la figure 4 est une vue agrandie d'une lame du dispositif de la figure 3 ;
- les figures 5 à 8 sont des vues en perspective de la lame au contact d'une porte de l'installation de la figure 1 dans des positions successives ;
- la figure 9 est une vue en perspective d'un dispositif de raclage d'une installation selon un second mode de réalisation de l'invention.

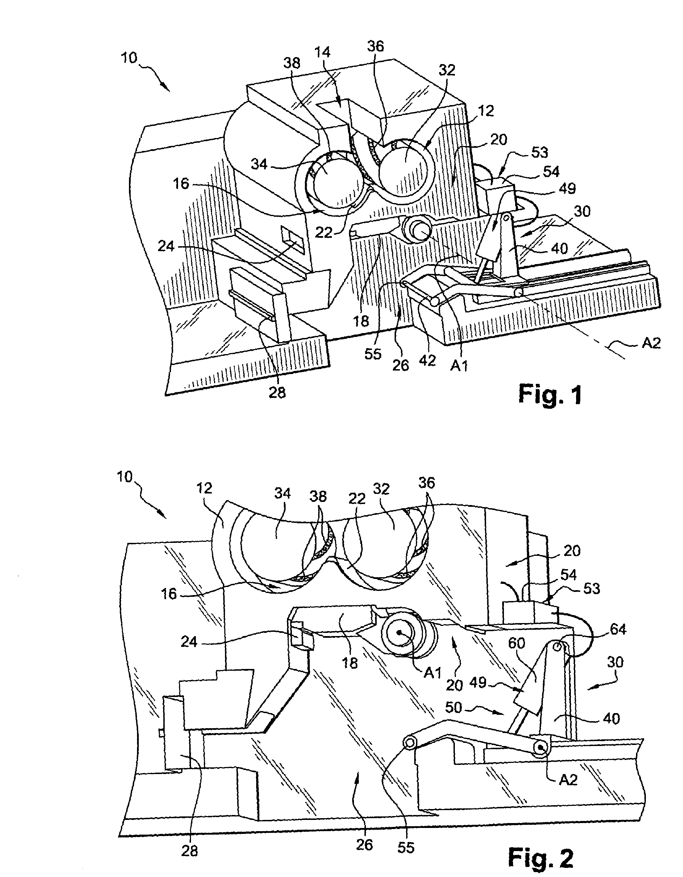

On a représenté sur les figures 1 à 8 une installation selon un premier mode de réalisation désignée par la référence générale 10.

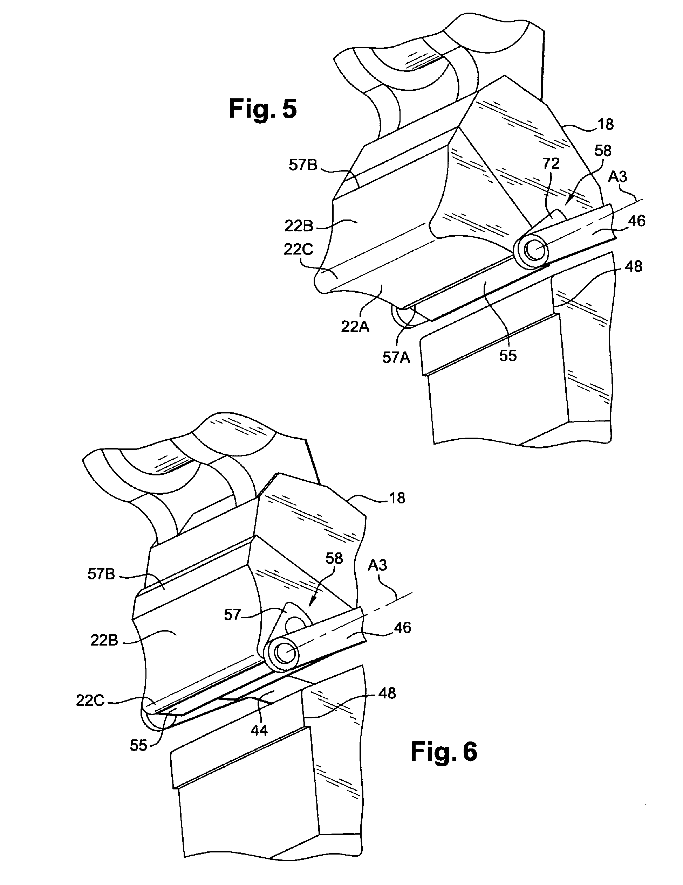

L'installation 10 comprend une cuve 12 de mélangeage d'une masse de gomme. La cuve 12 comprend une ouverture 14 de chargement de la cuve, une ouverture 16 de sortie de la masse de gomme et une porte 18 d'obturation de l'ouverture 16. La porte 18 est mobile en rotation autour d'un axe A1 entre une position d'obturation de l'ouverture 16, représentée aux figures 1 à 4, et une position de dégagement de l'ouverture, représentée aux figures 5 à 8. A cet effet, l'installation 10 comprend des moyens motorisés 20 de déplacement de la porte 18, en l'espèce un moteur électrique. En outre, la porte 18 comporte une surface 22, dite interne, destinée à délimiter la cuve en position d'obturation. La surface interne 22 est générée par des génératrices sensiblement parallèles à l'axe A1.

De plus, l'installation 10 comprend des moyens 24 de verrouillage de la porte 18 dans la position d'obturation de la porte 18.

L'installation 10 comprend également un espace 26 de tombée situé en dessous de la cuve 12 permettant la chute de la masse de gomme depuis la cuve 12 lorsque la porte 18 est dans la position de dégagement.

En outre, l'installation 10 comprend une trappe 28 d'accès à l'espace 26.

L'installation 10 comprend de plus un dispositif 30 de raclage de la gomme adhérant à la surface interne 22.

La cuve 12 comprend deux rotors rotatifs 32, 34 de mélangeage, mobiles en rotation autour d'axes R1, R2 sensiblement parallèles à l'axe A1. Chaque rotor 32, 34 comprend respectivement des ailes de mélangeage 36, 38.

Le dispositif de raclage 30 comprend un bâti 40 et un organe de raclage 42 articulé en rotation autour d'un axe A2 du dispositif 30, sensiblement parallèle à l'axe A1.

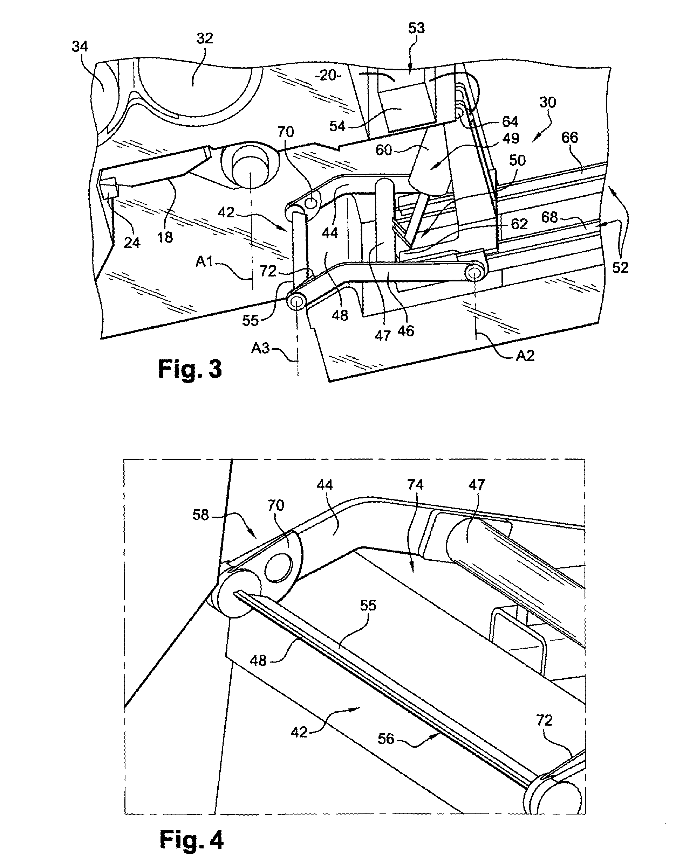

En référence à la figure 3, le dispositif 30 comprend également un paire de bras 44, 46 de support de l'organe de raclage 42 entre lesquels cet organe 42 s'étend. La paire de bras 44, 46 est montée mobile en rotation par rapport au bâti 40 autour de l'axe A2. Le dispositif comprend également une traverse 47 reliant entre eux les bras 44, 46.

De plus, le dispositif 30 comprend un reposoir 48 d'appui des bras 44, 46.

En outre, le dispositif 30 comprend des moyens 49 de déplacement de l'organe de raclage 34 ainsi que des moyens 50 de sollicitation de l'organe de raclage 34 contre la gomme à racler. Le dispositif 30 comprend également des moyens 52 de réglage de la position du bâti 30 par rapport à la porte 18.

L'installation 10 comprend également des moyens 53 de synchronisation entre les déplacements de la porte 18 et ceux de l'organe de raclage 42.

Comme représenté sur les figures 1 et 2, les moyens de synchronisation 53 comprennent une unité de pilotage 54 reliant les moyens de déplacement 49 de l'organe 34 et les moyens de déplacement 20 de la porte 18.

Comme représenté sur les figures 1 à 8, l'organe 42 comprend une lame 55 destinée à venir au contact de la surface interne 22 et présentant un bord 56 destinée à racler la gomme adhérant à la surface interne 22.

La surface interne 22 présente deux portions concaves 22A, 22B reliées entre elles par une portion convexe 22C. Chaque portion 22A, 22B comporte respectivement un bord d'extrémité 57A, 57B délimitant la surface 22.

Le bord 56 est sensiblement rectiligne et parallèle aux axes A1, A2. Dans ce premier mode de réalisation la lame est montée articulée sur les bras 44, 46 autour d'un axe A3 d'orientation de la lame 55 par rapport à la surface interne 22. L'axe A3 est sensiblement parallèle aux axes A1 et A2. En variante, la lame 55 est fixe par rapport aux bras 44, 46.

De plus, le dispositif 30 comprend des moyens 58 d'orientation angulaire automatiques de la lame 55 autour de l'axe d'orientation A3.

Comme représenté sur la figure 3, les moyens de déplacement 49 et de sollicitation 50 comprennent un vérin hydraulique 60 relié à la traverse 47 solidaire des bras 44, 46 et au bâti 40 respectivement par des liaisons rotatives 62, 64 autour d'axes sensiblement parallèles à l'axe A2.

Les moyens de réglage 52 comprennent deux rails 66, 68 sur lesquels le bâti 40 est monté mobile en translation par rapport à la porte 18.

Les moyens de d'orientation 58 de la lame 55 sont du type agissant par gravité. En l'espèce, ces moyens 58 comprennent deux balourds 70, 72 solidaires de la lame 55.

En référence aux figures 4 à 8, la paire de bras 44, 46 délimite un espace 74 de dégagement dans lequel la porte 18 est destinée à être déplacée au moins sur une partie de sa trajectoire entre ses positions d'obturation et de dégagement.

L'installation 10 permet de fabriquer une masse de gomme conformément au procédé de fabrication dont on décrira ci-dessous les principales étapes liées à l'invention.

Tout d'abord, on charge la cuve 12 avec les constituants destinés à former la masse de gomme par l'ouverture 14. Puis, on mélange ces constituants dans la cuve 12 au moyen des rotors 32, 34.

A la fin de l'étape de mélangeage de la gomme, on arrête les rotors 32, 34. Puis on ouvre la cuve 12 par son ouverture 16 en déplaçant la porte 18 depuis sa position d'obturation jusque dans sa position de dégagement.

Au cours de ce déplacement, la masse de gomme présente dans la cuve 12 chute dans l'espace de tombée 26.

En outre, au cours de ce déplacement, on synchronise entre eux les déplacements de l'organe de raclage 42 et ceux de la porte 18.

Lors du déplacement, dans un plan sensiblement perpendiculaires aux axes A1, A2, la trajectoire de la surface interne 22 intersecte la trajectoire du bord de raclage 56. Ainsi, l'intégralité de la surface interne 22 est raclée par le bord 56.

Comme représenté sur la figure 5, la trajectoire de l'organe 42 présente une position, dite d'engagement, dans laquelle le bord 56 rentre en contact avec le bord d'extrémité 57A de la portion 22A de la surface interne 22. Pour atteindre la position d'engagement, on déplace l'organe 42 depuis une position, dite de repos, dans laquelle les bras 44, 46 prennent appui sur le reposoir 47, jusqu'à ce que le bord 56 rentre en contact avec le bord 57A.

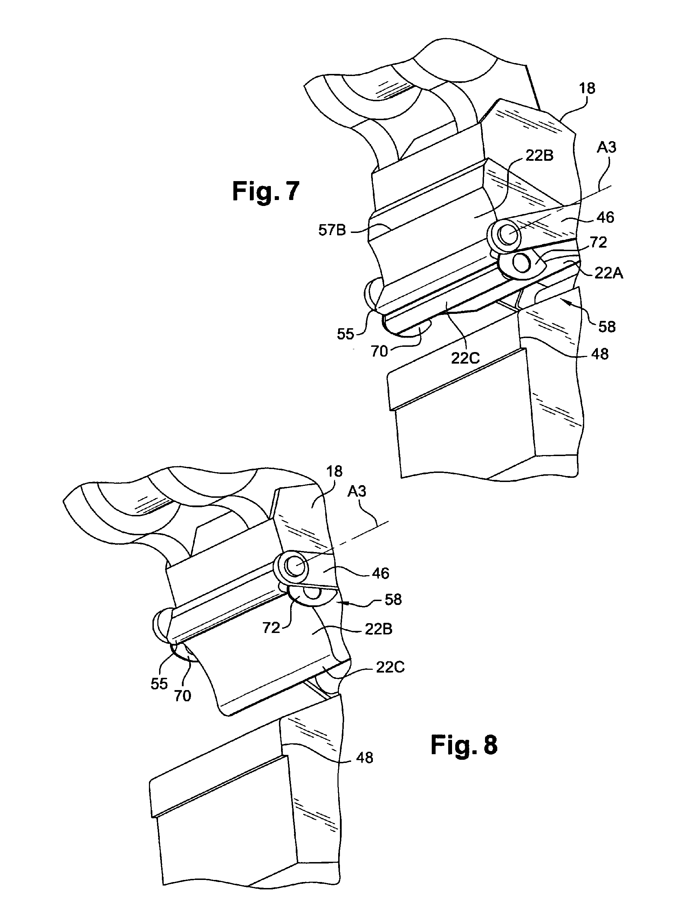

Puis, on déplace la porte 18 et l'organe 42. Le bord 56 racle la portion 22A (figure 5), puis la portion 22C (figure 6) et enfin la surface 22B jusqu'à ce que le bord 56 atteigne le bord d'extrémité 57B (figure 8). L'organe 42 est alors dans une position de fin de raclage.

On déplace alors l'organe 42 depuis la position de fin de raclage jusque dans la position de repos.

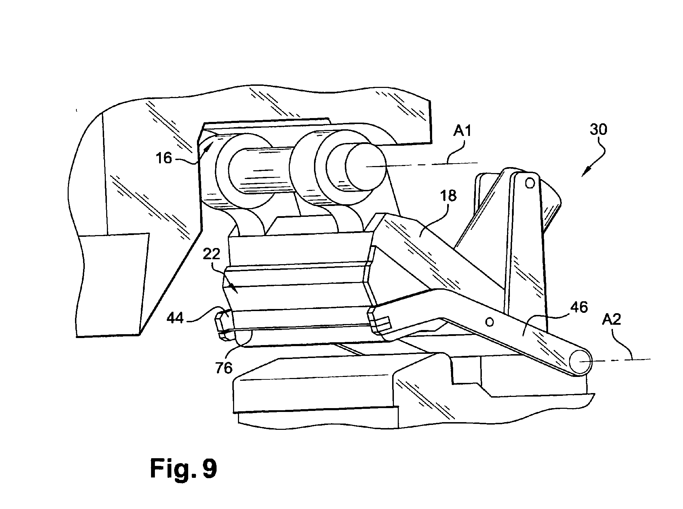

On a représenté sur la figure 9 une installation 10 selon un second mode de réalisation de l'invention. Dans ce mode de réalisation, les éléments analogues au premier mode de réalisation sont désignés par des références identiques. L'omission des références numériques d'éléments sur la figure 9 ne signifie pas qu'ils sont absents de ce second mode de réalisation.

A la différence du premier mode de réalisation, l'organe de raclage 42 comprend un fil de raclage 76 de la surface interne 22. Le fil présente une section sensiblement cylindrique et est sensiblement parallèle aux axes A1 et A2.

L'invention ne se limite pas aux modes de réalisation précédemment décrits.

En effet, les trajectoires de la surface interne et de l'organe de raclage pourront être différentes d'une simple rotation autour d'un axe. Ainsi, la porte pourra, par exemple, présenter une trajectoire résultant de la combinaison, successive ou simultanée :
- de plusieurs rotations autour d'axes de rotation distincts, ou
- d'une translation et d'une rotation, ou
- de plusieurs translations.

## Revendications

1. Installation (10) de fabrication d'une masse de gomme du type comprenant une cuve (12) de mélangeage de la masse de gomme comprenant
- une ouverture (16) de sortie de la masse de gomme ;
- une porte (18) d'obturation de l'ouverture mobile entre :
○ une position d'obturation de l'ouverture (16), et
○ une position de dégagement de l'ouverture (16),
**caractérisée en ce qu'**elle comprend de plus :
- un dispositif (30) de raclage de la gomme adhérant à une surface (22), dite interne, de la porte (18), ce dispositif (30) comprenant un organe (42) de raclage mobile comportant un bord (56) destiné à racler la gomme adhérant à la surface interne (22), et
- des moyens (53) de synchronisation entre les déplacements de la porte (18) et de l'organe de raclage (42).

2. Installation (10) selon la revendication 1, dans laquelle la porte (18) est mobile en rotation autour d'un axe (A1) de la porte (18) et l'organe de raclage (42) est articulé en rotation autour d'un axe (A2) du dispositif de raclage (30) sensiblement parallèle à l'axe (A1) de la porte (18).

3. Installation (10) selon la revendication 2, dans laquelle, la surface interne (22) étant générée par des génératrices sensiblement parallèles aux axes (A1, A2), la trajectoire de la surface interne (22) intersecte, dans un plan sensiblement perpendiculaire aux axes, la trajectoire du bord de raclage (56).

4. Installation (10) selon l'une quelconque des revendications précédentes, dans laquelle le dispositif de raclage (30) comprend des moyens (49, 50) de déplacement et de sollicitation de l'organe de raclage (42) contre la gomme à racler, comprenant notamment un vérin (60).

5. Installation (10) selon la revendication 4, dans lequel, l'installation (10) comprenant des moyens de déplacement (20) de la porte (18), les moyens de synchronisation (53) comprennent une unité de pilotage (54) reliant les moyens de déplacement (49) de l'organe de raclage et les moyens de déplacement (20) de la porte.

6. Installation (10) selon l'une quelconque des revendications précédentes, dans laquelle le dispositif de raclage (30) comprend une paire de bras (44, 46) de support de l'organe de raclage (42) entre lesquels s'étend l'organe de raclage, les bras étant montés mobiles en rotation autour de l'axe (A2) du dispositif de raclage (30) et délimitant un espace de dégagement (74) dans lequel la porte (18) est destinée à être déplacée au moins sur une partie de sa trajectoire entre ses positions d'obturation et de dégagement.

7. Installation (10) selon l'une quelconque des revendications précédentes, dans laquelle l'organe de raclage (42) comprend une lame (55) destinée à venir au contact de la surface interne (22) de la porte (18).

8. Installation (10) selon la revendication 7, dans laquelle la lame (55) est montée articulée sur les bras (44, 46) autour d'un axe (A3) d'orientation de la lame (55) par rapport à la surface interne (22), l'axe d'orientation (A3) étant sensiblement parallèle aux axes (A1, A2).

9. Installation (10) selon la revendication 8, dans laquelle le dispositif de raclage (30) comprend des moyens (58) d'orientation angulaire automatiques de la lame (55) autour de l'axe d'orientation (A3), de préférence des moyens de déplacement de la lame autour de l'axe de rotation par gravité, par exemple des balourds (70, 72).

10. Installation (10) selon la revendication 7, dans laquelle la lame (55) est fixe par rapport aux bras (44, 46).

11. Installation (10) selon l'une quelconque des revendications 1 à 6, dans laquelle l'organe de raclage (42) comprend un fil (76) de raclage destiné à venir au contact de la surface interne (22) de la porte (18).

12. Procédé de fabrication d'une masse de gomme **caractérisé en ce qu'**on fabrique une masse de gomme dans une installation (10) selon l'une quelconque des revendications précédentes et **en ce qu'**on synchronise entre eux les déplacements de l'organe de raclage (42) et de la porte (18).

## Claims

1. Installation (10) for manufacturing a mass of rubber, of the type comprising a mixing tank (12) for mixing the mass of rubber, comprising
- a rubber mass discharge opening (16);
- a door (18) for closing off the opening and able to move between:
○ a position in which it closes off the opening (16), and
○ a position in which it uncovers the opening (16), **characterized in that** it additionally comprises:
- a device (30) for scraping rubber stuck to a surface (22), known as the internal surface, of the door (18), this device (30) comprising a moving scraping member (42) comprising an edge (56) intended to scrape the rubber stuck to the internal surface (22), and
- synchronizing means (53) for synchronizing the movements of the door (18) and those of the scraping member (42).

2. Installation (10) according to Claim 1, in which the door (18) is able to rotate about an axis (A1) of the door (18) and the scraping member (42) is articulated so that it can rotate about an axis (A2) of the scraping device (30) which runs substantially parallel to the axis (A1) of the door (18).

3. Installation (10) according to Claim 2, in which, with the internal surface (22) being generated by generatrices that run substantially parallel to the axes (A1, A2), the path of the internal surface (22) intersects, in a plane substantially perpendicular to the axes, the path of the scraping edge (56).

4. Installation (10) according to any one of the preceding claims, in which the scraping device (30) comprises means (49, 50) for moving and urging the scraping member (42) against the rubber that is to be scraped, these means notably comprising a cylinder actuator (60).

5. Installation (10) according to Claim 4, in which, with the installation (10) comprising means (20) of moving the door (18), the synchronizing means (53) comprise a control unit (54) connecting the means (49) of moving the scraping member with the means (20) of moving the door.

6. Installation (10) according to any one of the preceding claims, in which the scraping device (30) comprises a pair of support arms (44, 46) that support the scraping member (42) and between which the scraping member extends, the arms being mounted so that they can rotate about the axis (A2) of the scraping device (30) and defining a clearance space (74) in which the door (18) is intended to be moved at least over part of its path between its closing-off and uncovering positions.

7. Installation (10) according to any one of the preceding claims, in which the scraping member (42) comprises a blade (55) intended to come into contact with the internal surface (22) of the door (18).

8. Installation (10) according to Claim 7, in which the blade (55) is mounted in an articulated fashion on the arms (44, 46) about an axis (A3) of orientation of the blade (55) with respect to the internal surface (22), the axis of orientation (A3) being substantially parallel to the axes (A1, A2).

9. Installation (10) according to Claim 8, in which the scraping device (30) comprises automatic means (58) of angularly orientating the blade (55) about the axis of orientation (A3), preferably means of moving the blade about the axis of rotation under gravity, for example unbalancing masses (70, 72).

10. Installation (10) according to Claim 7, in which the blade (55) is fixed with respect to the arms (44, 46).

11. Installation (10) according to any one of Claims 1 to 6, in which the scraping member (42) comprises a scraping wire (76) intended to come into contact with the internal surface (22) of the door (18).

12. Method of manufacturing a mass of rubber, **characterized in that** a mass of rubber is manufactured in an installation (10) according to any one of the preceding claims, and **in that** the movements of the scraping member (42) and of the door (18) are synchronized with one another.

## Patentansprüche

1. Anlage (10) für die Herstellung einer Gummimasse des Typs, der eine Wanne (12) für das Gummimassengemisch aufweist, mit
- einer Öffnung (16) für den Auslass der Gummimasse;
- einer Tür (18) zum Verschließen der beweglichen Öffnung zwischen:
■ einer Stellung zum Verschließen der Öffnung (16) und
■ einer Stellung zum Freigeben der Öffnung (16),
**dadurch gekennzeichnet, dass** sie außerdem enthält:
- eine Vorrichtung (30) zum Abstreichen des Gummis, der an einer Oberfläche (22), der so genannten inneren Oberfläche, der Tür (18) haftet, wobei diese Vorrichtung (30) ein bewegliches Abstreichorgan (42) enthält, das eine Kante (56) aufweist, die dazu bestimmt ist, den an der inneren Oberfläche (22) haftenden Gummi abzustreichen, und
- Mittel (53) für die Synchronisation zwischen den Verlagerungen der Tür (18) und dem Abstreichorgan (42).

2. Anlage (10) nach Anspruch 1, wobei die Tür (18) rotatorisch um eine Achse (A1) der Tür (18) beweglich ist und das Abstreichorgan (42) rotatorisch um eine Achse (A2) der Abstreichvorrichtung (30), die zu der Achse (A1) der Tür (18) im Wesentlichen parallel ist, schwenkbar ist.

3. Anlage (10) nach Anspruch 2, wobei dann, wenn die innere Oberfläche (22) durch Erzeugende erzeugt wird, die zu den Achsen (A1, A2) im Wesentlichen parallel sind, die Bahn der inneren Oberfläche (22) in einer zu den Achsen im Wesentlichen senkrechten Ebene die Bahn der Abstreichkante (56) schneidet.

4. Anlage (10) nach einem der vorhergehenden Ansprüche, wobei die Abstreichvorrichtung (30) Mittel (49, 50) zum Verlagern und Drängen des Abstreichorgans (42) gegen den abzustreichenden Gummi, die insbesondere einen Stellzylinder (60) enthalten, aufweist.

5. Anlage (10) nach Anspruch 4, wobei dann, wenn die Anlage (10) Mittel (20) zum Verlagern der Tür (18) enthält, die Synchronisationsmittel (53) eine Steuereinheit (54) enthalten, die die Verlagerungsmittel (49) für das Abstreichorgan mit den Verlagerungsmitteln (20) für die Tür verbindet.

6. Anlage (10) nach einem der vorhergehenden Ansprüche, wobei die Abstreichvorrichtung (30) ein Paar Arme (44, 46) für die Unterstützung des Abstreichorgans (42) enthält, zwischen denen das Abstreichorgan verläuft, wobei die Arme rotatorisch um die Achse (A2) der Abstreichvorrichtung (30) beweglich montiert sind und einen Freigaberaum (74) begrenzen, in dem die Tür (18) wenigstens auf einem Teil ihrer Bahn zwischen ihrer Verschluss- und ihrer Freigabestellung verlagert werden soll.

7. Anlage (10) nach einem der vorhergehenden Ansprüche, wobei das Abstreichorgan (42) ein Plättchen (55) enthält, das dazu vorgesehen ist, mit der inneren Oberfläche (22) der Tür (18) in Kontakt zu gelangen.

8. Anlage (10) nach Anspruch 7, wobei das Plättchen (55) an den Armen (44, 46) um eine Achse (A3) für die Orientierung des Plättchens (55) in Bezug auf die innere Oberfläche (22) schwenkbar montiert ist, wobei die Orientierungsachse (A3) zu den Achsen (A1, A2) im Wesentlichen parallel ist.

9. Anlage (10) nach Anspruch 8, wobei die Abstreichvorrichtung (30) automatische Mittel (58) für die Winkelorientierung des Plättchens (55) um die Orientierungsachse (A3) enthält, vorzugsweise Mittel zum Verlagern des Plättchens um die Drehachse durch Schwerkraft, beispielsweise Unwuchten (70, 72).

10. Anlage (10) nach Anspruch 7, wobei das Plättchen (55) in Bezug auf die Arme (44, 46) fixiert ist.

11. Anlage (10) nach einem der Ansprüche 1 bis 6, wobei das Abstreichorgan (42) einen Abstreichdraht (76) enthält, der dazu vorgesehen ist, mit der inneren Oberfläche (22) der Tür (18) in Kontakt zu gelangen.

12. Verfahren zum Herstellen einer Gummimasse, **dadurch gekennzeichnet, dass** eine Gummimasse in einer Anlage (10) nach einem der vorhergehenden Ansprüche hergestellt wird und **dass** die Verlagerungen des Abstreichorgans (42) und der Tür (18) untereinander synchronisiert sind.
